# FASCICULE DE BREVET EUROPEEN

(11) **EP 4 225 597 B1**
(45) Date de publication et mention de la délivrance du brevet: **10.09.2025**
(21) Numéro de dépôt: 21790424.2
(22) Date de dépôt: 08.10.2021
(51) Int. Cl.: B60J 7/043, B60J 7/19, B60R 9/04

(54) **TOIT OUVRANT DE VÉHICULE MANOEUVRABLE MANUELLEMENT**
HANDBEDIENBARES SONNENDACH FÜR EIN FAHRZEUG
MANUALLY OPERABLE VEHICLE SUNROOF

(30) Priorité: 09.10.2020 FR 2010347
(43) Date de publication de la demande: 16.08.2023
(73) Titulaire: Renault s.a.s, 92100 Boulogne Billancourt (FR)
(72) Inventeur: BEZEAULT, Loic, 78150 LE CHESNAY (FR); WASTYN, Laurent, 78210 Saint Cyr l'Ecole (FR)
(86) Numéro de dépôt international: PCT/EP2021/077817
(87) Numéro de publication internationale: WO 2022/074179

(56) Documents cités:
- JP-A- H03 139 428
- JP-A- H03 139 429
- US-A- 2 109 710
- US-B1- 6 338 509

## Description

### Domaine Technique de l'invention

L'invention concerne un dispositif de guidage pour un toit ouvrant de véhicule. L'invention porte aussi sur un agencement comprenant un tel dispositif de guidage. L'invention porte encore sur une caisse de véhicule comprenant un tel agencement et/ou un tel dispositif de guidage. L'invention porte encore sur un véhicule comprenant une telle caisse et/ou un tel agencement et/ou un tel dispositif de guidage.

### Etat de la technique antérieure

Un véhicule, en particulier un véhicule automobile, peut comprendre un toit ouvrant. Un tel toit ouvrant permet d'aérer davantage le véhicule et/ou de rendre l'habitacle davantage lumineux en cas de toit ouvrant au moins partiellement transparent et/ou translucide. Le document JP H03 139428 A divulgue un dispositif de guidage pour un toit ouvrant de véhicule.

Seulement l'implantation d'un toit ouvrant est complexe, aussi bien en usine lors de la fabrication du véhicule qu'ultérieurement, en après-vente. D'un point de vue architecture véhicule, ce dernier amène des contraintes ergonomiques par ses dimensions et son implantation sous le pavillon. Il en résulte des coûts importants pour les constructeurs de véhicules. Ainsi, un véhicule équipé d'un toit ouvrant, correspondant généralement à une option sur le véhicule, est commercialisé à un prix supérieur ce qui présente un frein à l'achat pour certains consommateurs.

### Présentation de l'invention

Le but de l'invention est de fournir un dispositif de toit ouvrant remédiant aux inconvénients ci-dessus. En particulier, l'invention permet de fournir un dispositif de toit ouvrant particulièrement simple, fiable, compact et robuste.

### Résumé de l'invention

Pour atteindre cet objectif, l'invention porte sur un dispositif de guidage pour un toit ouvrant de véhicule selon la revendication 1. Le dispositif de guidage pour un toit ouvrant de véhicule, notamment de véhicule automobile, comprenant :
- un premier moyen de guidage s'étendant longitudinalement ou sensiblement longitudinalement au-dessus d'un pavillon d'un tel véhicule du côté droit, notamment une première barre de toit agencée à droite,
- un deuxième moyen de guidage s'étendant longitudinalement ou sensiblement longitudinalement au-dessus d'un pavillon d'un tel véhicule du côté gauche, notamment une deuxième barre de toit agencée à gauche.
Le premier moyen de guidage peut comprendre une première rainure et une deuxième rainure pouvant s'étendre respectivement dans un premier plan et dans un deuxième plan, les premier et deuxième plans pouvant être distincts, parallèles et pouvant s'étendre verticalement et longitudinalement,
et le deuxième moyen de guidage peut comprendre une troisième rainure et une quatrième rainure pouvant s'étendre respectivement dans un troisième plan et dans un quatrième plan, les troisième et quatrième plans pouvant être distincts, parallèles et pouvant s'étendre verticalement et longitudinalement.

La deuxième rainure et la quatrième rainure comprennent respectivement un guidage ou piste ou saignée au niveau des extrémités avant de chacune de ces rainures afin de permettre une cinématique non rectiligne lors d'un mouvement toit ouvrant.

Plus particulièrement, le dispositif de guidage comprend des guidages qui assurent un décalage de l'arrière du toit selon une direction verticale ou sensiblement verticale.

L'invention porte encore sur un agencement comprenant un dispositif de guidage tel que défini précédemment et un toit ouvrant, le toit ouvrant pouvant comprendre un cadre, notamment un cadre métallique, et/ou le toit ouvrant pouvant comprendre un panneau, notamment un panneau comprenant une surface vitrée, notamment un panneau assemblé sur le cadre par collage.

Le toit ouvrant peut comprendre des premiers moyens de glissement et/ou de roulement agencés à droite du toit ouvrant et destinés à coopérer avec le premier moyen de guidage,
et le toit ouvrant peut comprendre des deuxièmes moyens de glissement et/ou de roulement agencés à gauche du toit ouvrant et destinés à coopérer avec le deuxième moyen de guidage.

Les premiers moyens de glissement et/ou de roulement peuvent comprendre un premier galet et un deuxième galet destinés à coopérer avec le premier moyen de guidage, notamment respectivement avec la première rainure et la deuxième rainure,
et les deuxièmes moyens de glissement et/ou de roulement peuvent comprendre un troisième galet et un quatrième galet destinés à coopérer avec le deuxième moyen de guidage, notamment respectivement avec la troisième rainure et la quatrième rainure.

Les premiers moyens de glissement et/ou de roulement peuvent comprendre un premier axe de rotation du premier galet et un deuxième axe de rotation du deuxième galet,
et les deuxièmes moyens de glissement et/ou de roulement peuvent comprendre un troisième axe de rotation du troisième galet et un quatrième axe de rotation du quatrième galet,
notamment des premier et deuxième axes de rotation fixés du côté droit du cadre et des troisième et quatrième axes de rotation fixés du côté gauche du cadre.

Les premiers et troisièmes axes de rotation peuvent être coaxiaux ou sensiblement coaxiaux et les deuxième et quatrième axes de rotation peuvent être coaxiaux ou sensiblement coaxiaux et peuvent s'étendre transversalement ou sensiblement transversalement.

L'invention porte encore sur une caisse de véhicule, notamment de véhicule automobile, comprenant un pavillon dans lequel une ouverture est ménagée, la caisse comprenant un agencement tel que défini précédemment, le premier moyen de guidage et le deuxième moyen de guidage coopérant respectivement avec les premiers moyens de glissement et/ou de roulement et les deuxièmes moyens de glissement et/ou de roulement de sorte à rendre mobile le toit ouvrant par rapport au pavillon entre une position fermée dans laquelle l'ouverture est obstruée par le toit ouvrant et au moins une position d'ouverture intermédiaire dans laquelle l'ouverture est au moins partiellement obstruée par le toit ouvrant, notamment jusqu'à une position d'ouverture totale dans laquelle le toit ouvrant n'est pas en vis-à-vis de l'ouverture, et vice versa.

Le toit ouvrant peut comprendre un premier moyen de verrouillage et déverrouillage du toit ouvrant dans la position fermée et un deuxième moyen de verrouillage et déverrouillage du toit ouvrant dans l'au moins une position d'ouverture intermédiaire ou dans la position d'ouverture totale.

Le toit ouvrant peut comprendre une poignée escamotable coopérant avec le pavillon pour verrouiller ou déverrouiller le premier moyen de verrouillage et déverrouillage du toit ouvrant dans la position fermée et le deuxième moyen de verrouillage et déverrouillage du toit ouvrant dans l'au moins une position d'ouverture intermédiaire ou dans la position d'ouverture totale.

Le toit ouvrant peut comprendre une patte de fixation de la poignée escamotable, notamment une patte de fixation agencée sur le cadre.

La caisse peut comprendre un joint d'étanchéité agencé au niveau d'un pourtour de l'ouverture.

Le pourtour de l'ouverture peut comprendre une feuillure, notamment une feuillure s'étendant verticalement, de sorte à permettre le positionnement et le maintien en place du joint, notamment d'un joint pouvant comprendre une armature.

L'invention porte encore sur un véhicule, notamment un véhicule automobile, comprenant un dispositif de guidage tel que défini précédemment, et/ou un agencement tel que défini précédemment, et/ou une caisse telle que définie précédemment.

### Présentation des figures

Ces objets, caractéristiques et avantages de la présente invention seront exposés en détail dans la description suivante d'un mode de réalisation faite à titre non-limitatif en relation avec les figures jointes parmi lesquelles :
[Fig. 1] La figure 1 est une vue partielle en perspective d'un véhicule selon un mode de réalisation, un toit ouvrant étant en position fermée.
[Fig. 2] La figure 2 est une vue partielle en perspective d'un véhicule selon un mode de réalisation, un toit ouvrant étant en position intermédiaire d'ouverture.
[Fig. 3] La figure 3 est une autre vue partielle en perspective d'un véhicule selon le mode de réalisation, un toit ouvrant étant en position ouverte totale.
[Fig. 4] La figure 4 est une vue du véhicule depuis l'habitacle, suivant la direction verticale vers le haut, selon le mode de réalisation, un toit ouvrant étant en position d'ouverture totale.
[Fig. 5] La figure 5 est une autre vue du véhicule depuis l'habitacle, suivant la direction verticale vers le haut, selon le mode de réalisation, le toit ouvrant étant en position fermée.
[Fig. 6] La figure 6 est une vue partielle de dessus du véhicule selon le mode de réalisation, le toit ouvrant étant en position d'ouverture intermédiaire.
[Fig. 7] La figure 7 est une vue partielle en perspective du véhicule depuis l'habitacle selon le mode de réalisation, le toit ouvrant étant fermé.
[Fig. 8] La figure 8 est une vue en perspective d'un agencement selon un mode de réalisation, le toit ouvrant étant fermé.
[Fig. 9] La figure 9 est une vue partielle en perspective de l'agencement comprenant une première barre de toit selon le mode de réalisation.
[Fig. 10] La figure 10 est une autre vue partielle en perspective de l'agencement comprenant une première barre de toit sans enjoliveur selon le mode de réalisation.
[Fig. 11] La figure 11 est une vue partielle en perspective d'un pavillon équipé du toit ouvrant de l'agencement selon un mode de réalisation, la première barre de toit n'étant pas représentée.
[Fig. 12] La figure 12 est une coupe en perspective selon un premier plan vertical et transversal de l'agencement selon le mode de réalisation.
[Fig. 13] La figure 13 est une coupe en perspective selon un deuxième plan vertical et transversal de l'agencement selon le mode de réalisation.
[Fig. 14] La figure 14 est une coupe en perspective selon un troisième plan vertical et transversal de l'agencement selon le mode de réalisation.
[Fig. 15] La figure 15 est une coupe en perspective selon un quatrième plan vertical et transversal de l'agencement selon le mode de réalisation.
[Fig. 16] La figure 16 est une coupe en perspective selon un cinquième plan vertical et transversal de l'agencement selon le mode de réalisation.
[Fig. 17] La figure 17 est une vue partielle en perspective selon une direction vers le véhicule, de l'agencement selon le mode de réalisation, une deuxième barre de toit étant représentée sans enjoliveur.
[Fig. 18] La figure 18 est une vue partielle en perspective selon une direction hors du véhicule, de l'agencement selon le mode de réalisation, une deuxième barre de toit étant représentée sans enjoliveur.
[Fig. 19] La figure 19 est une vue partielle en perspective du pavillon et de la deuxième barre de toit sans enjoliveur de l'agencement selon un mode de réalisation.
[Fig. 20] La figure 20 est une vue de dessous du toit ouvrant de l'agencement selon un mode de réalisation.
[Fig. 21] La figure 21 est une vue en coupe et en perspective selon un plan médian vertical et longitudinal du véhicule d'un deuxième moyen de verrouillage / déverrouillage du toit ouvrant selon un mode de réalisation, le toit ouvrant étant en position d'ouverture intermédiaire.
[Fig. 22] La figure 22 est une vue en coupe et en perspective selon le plan médian vertical et longitudinal du deuxième moyen de verrouillage / déverrouillage du toit ouvrant selon le mode de réalisation, le toit ouvrant étant en position d'ouverture totale, le deuxième moyen de verrouillage / déverrouillage étant déverrouillé.
[Fig. 23] La figure 23 est une vue en coupe et en perspective selon le plan médian vertical et longitudinal du deuxième moyen de verrouillage / déverrouillage du toit ouvrant selon le mode de réalisation, le toit ouvrant étant en position d'ouverture totale, le deuxième moyen de verrouillage / déverrouillage étant verrouillé.
[Fig. 24] La figure 24 est une vue en perspective du deuxième moyen de verrouillage / déverrouillage du toit ouvrant selon le mode de réalisation, le toit ouvrant étant en position d'ouverture totale, le deuxième moyen de verrouillage / déverrouillage étant déverrouillé.
[Fig. 25] La figure 25 est une vue en perspective du deuxième moyen de verrouillage / déverrouillage du toit ouvrant selon le mode de réalisation, le toit ouvrant étant en position d'ouverture totale, le deuxième moyen de verrouillage / déverrouillage étant verrouillé.
[Fig. 26] La figure 26 est une vue en coupe et en perspective selon un plan médian vertical et longitudinal du véhicule d'un premier moyen de verrouillage / déverrouillage du toit ouvrant selon un mode de réalisation, le toit ouvrant étant en position fermée, le premier moyen de verrouillage / déverrouillage étant déverrouillé.
[Fig. 27] La figure 27 est une vue en coupe et en perspective selon un plan médian vertical et longitudinal du véhicule du premier moyen de verrouillage / déverrouillage du toit ouvrant selon un mode de réalisation, le toit ouvrant étant en position fermée, le premier moyen de verrouillage / déverrouillage étant verrouillé.

### Description détaillée

La direction selon laquelle un véhicule automobile se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule automobile se déplace habituellement dans la direction longitudinale et est opposé au sens arrière.

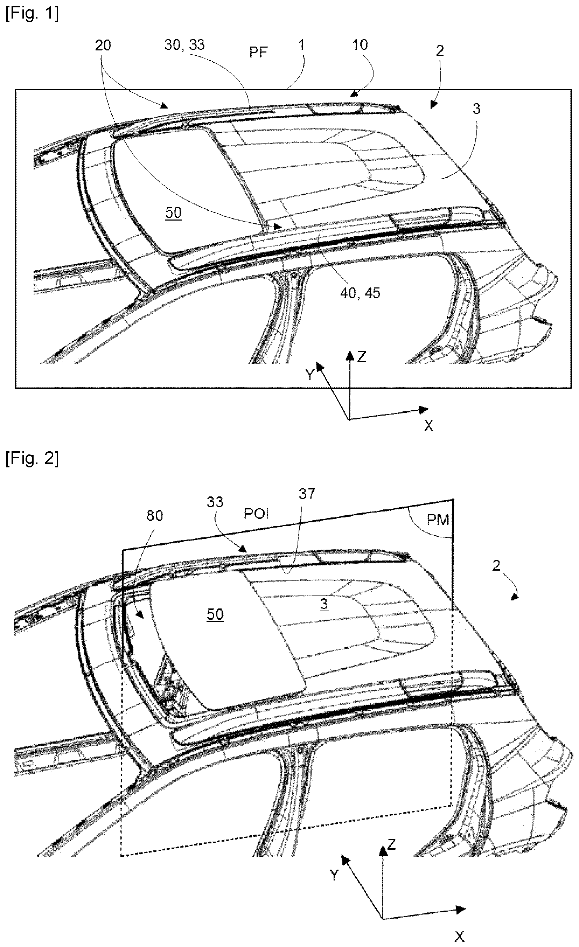

La figure 1 illustre schématiquement un véhicule, en particulier un véhicule automobile 1, selon un mode de réalisation. Le véhicule automobile 1 comprend une caisse 2. Le véhicule automobile 1, plus précisément la caisse 2, comprend encore un toit ou pavillon 3. Le pavillon 3 comprend une ouverture 80. De préférence, le pavillon 3 est fixé sur et/ou supporté par la caisse 2. Le véhicule automobile 1 comprend encore un toit ouvrant 50. Le toit ouvrant 50 est agencé au niveau du pavillon 3 de sorte à obstruer, dans une position fermée PF du toit ouvrant, l'ouverture 80 ménagée dans le pavillon 3.

Par exemple l'ouverture 80 est ménagée plutôt à l'avant du pavillon 3 comme illustré sur les figures 1 à 4. Alternativement, l'ouverture 80 peut être ménagée sensiblement au milieu du pavillon 3 selon la direction longitudinale, ou encore à l'arrière du pavillon selon cette même direction.

Alternativement, une première ouverture est ménagée à l'avant alors qu'une deuxième ouverture est ménagée davantage à l'arrière du pavillon 3. Dans ce cas, un premier toit ouvrant est destiné à obstruer ou découvrir la première ouverture alors qu'un deuxième toit ouvrant est destiné à obstruer ou découvrir la deuxième ouverture. Alternativement encore, un seul toit ouvrant peut venir obstruer ou découvrir simultanément ou sensiblement simultanément les première et deuxième ouvertures. Evidemment, plus de deux ouvertures sont envisageables (modes de réalisation non illustrés).

Le véhicule automobile 1 comprend encore un agencement 10.

L'agencement 10 comprend un dispositif de guidage 20 du toit ouvrant 50.

Comme illustré sur la figure 1, le dispositif de guidage 20 comprend un premier moyen de guidage 30 s'étendant longitudinalement ou sensiblement longitudinalement au niveau ou au-dessus du pavillon 3 du côté droit. Le dispositif de guidage 20 comprend un deuxième moyen de guidage 40 s'étendant longitudinalement ou sensiblement longitudinalement au niveau ou au-dessus du pavillon 3 du côté gauche.

Avantageusement, le premier moyen de guidage 30 est, ou comprend, une première barre 33 de toit agencée à droite du pavillon 3. Avantageusement, le deuxième moyen de guidage 40 est, ou comprend, une deuxième barre 45 de toit agencée à gauche du pavillon 3.

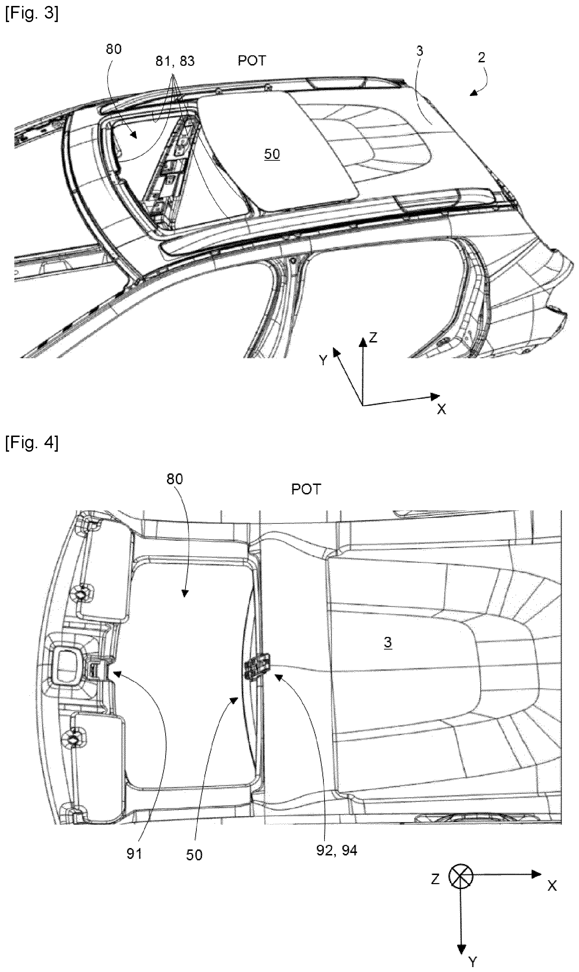

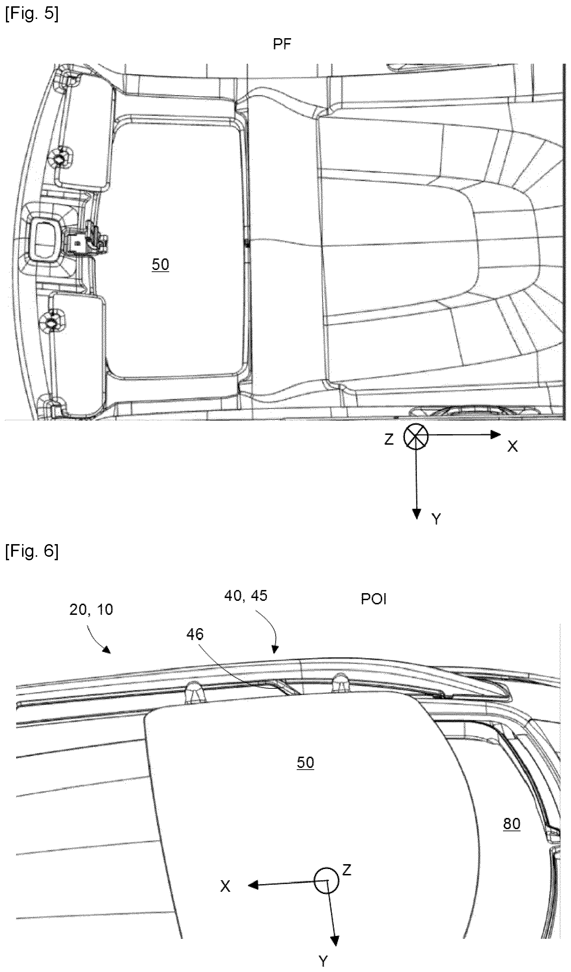

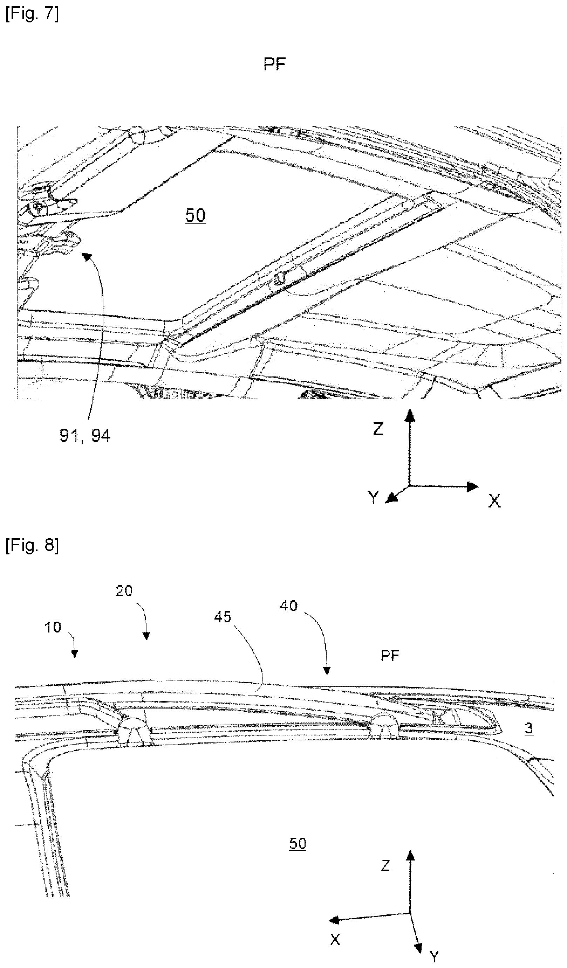

Comme il sera détaillé par la suite, le toit ouvrant 50 est mobile par rapport au pavillon 3 entre une position fermée PF (figures 1, 5, 7 et 8 notamment) dans laquelle l'ouverture 80 est obstruée par le toit ouvrant 50 et au moins une position d'ouverture intermédiaire POI (figures 2 et 6 notamment) dans laquelle l'ouverture 80 est au moins partiellement obstruée par le toit ouvrant 50. Avantageusement, cette mobilité du toit ouvrant permet d'atteindre une position d'ouverture totale POT (figures 3 et 4 notamment) dans laquelle le toit ouvrant 50 n'est pas, ou quasiment pas, en vis-à-vis de l'ouverture 80.

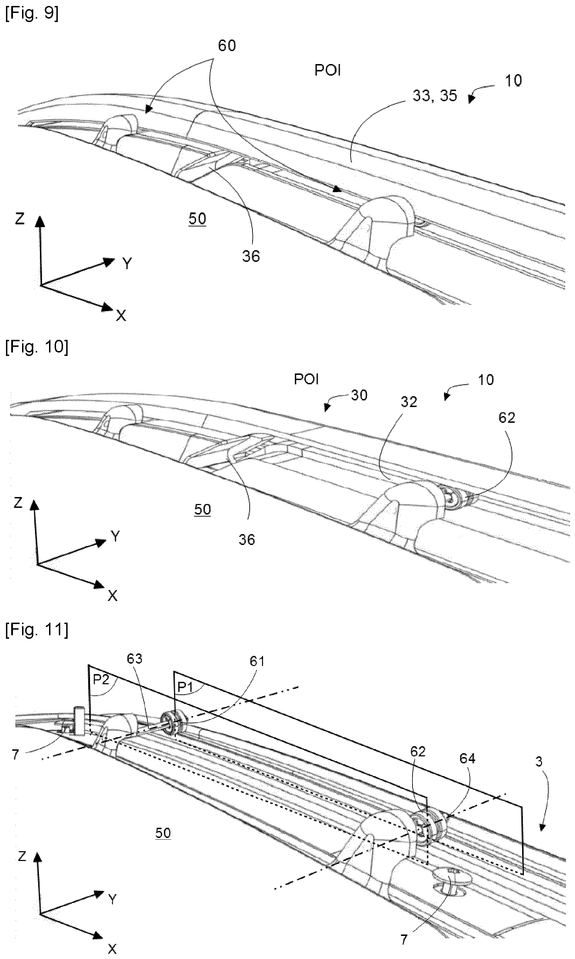

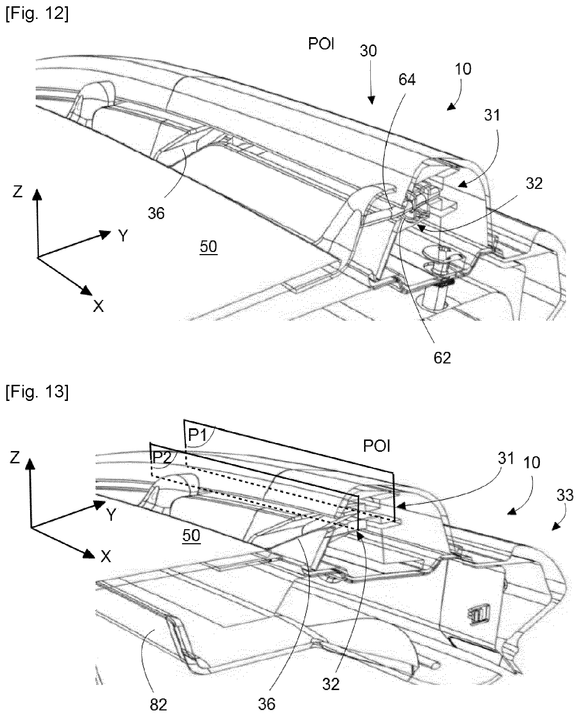

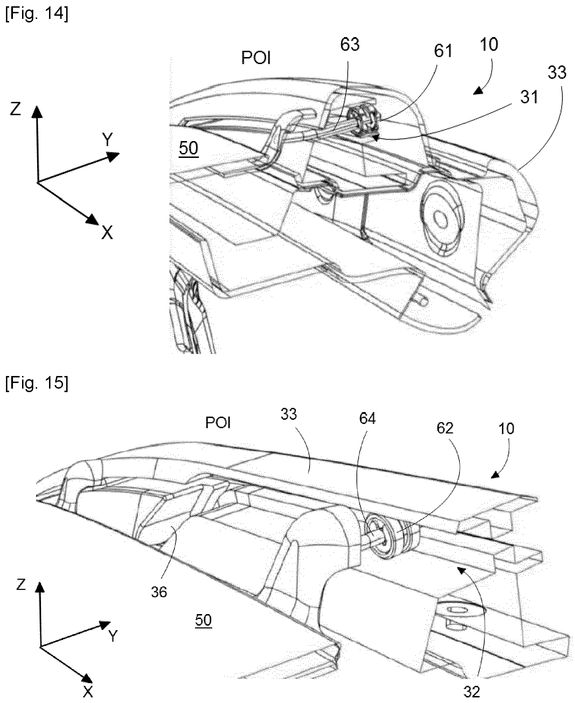

Comme illustré sur les figures 10, 12, 13, 14, 15 et 16 en particulier, le premier moyen de guidage 30, côté droit du véhicule, comprend une première rainure 31 et une deuxième rainure 32. De préférence, comme illustré sur les figures 11 et 13, la première rainure 31 s'étendant dans un premier plan P1 et la deuxième rainure 32 s'étend dans un deuxième plan P2. Les premier et deuxième plans P1, P2 sont distincts, parallèles et s'étendent verticalement et longitudinalement. Par exemple, la première rainure 31 s'étend de part et d'autre du premier plan P1, par exemple en étant centrée ou sensiblement centrée de part et d'autre du plan P1. Par exemple, la deuxième rainure 32 s'étend de part et d'autre du deuxième plan P2, par exemple en étant centrée ou sensiblement centrée de part et d'autre du plan P2.

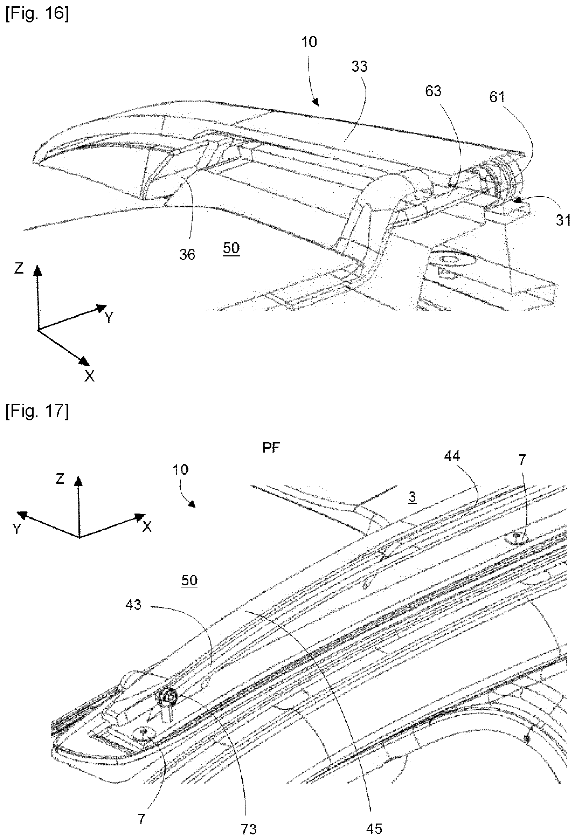

Comme illustré sur les figures 17, 18 et 19, le deuxième moyen de guidage 40, côté gauche du véhicule, comprend une troisième rainure 43 et une quatrième rainure 44. De préférence, la troisième rainure 43 s'étend dans un troisième plan (non illustré) et la quatrième rainure 44 s'étend dans un quatrième plan (non illustré). Les troisième et quatrième plans sont distincts, parallèles et s'étendent verticalement et longitudinalement. Par exemple, la troisième rainure 43 s'étend de part et d'autre du troisième plan, par exemple en étant centrée ou sensiblement centrée de part et d'autre de ce plan. Par exemple, la quatrième rainure 44 s'étend de part et d'autre du quatrième plan, par exemple en étant centrée ou sensiblement centrée de part et d'autre de ce plan.

L'agencement 10 comprend le dispositif de guidage 20, composé notamment des premier et deuxième moyens de guidage 30, 40, et le toit ouvrant 50.

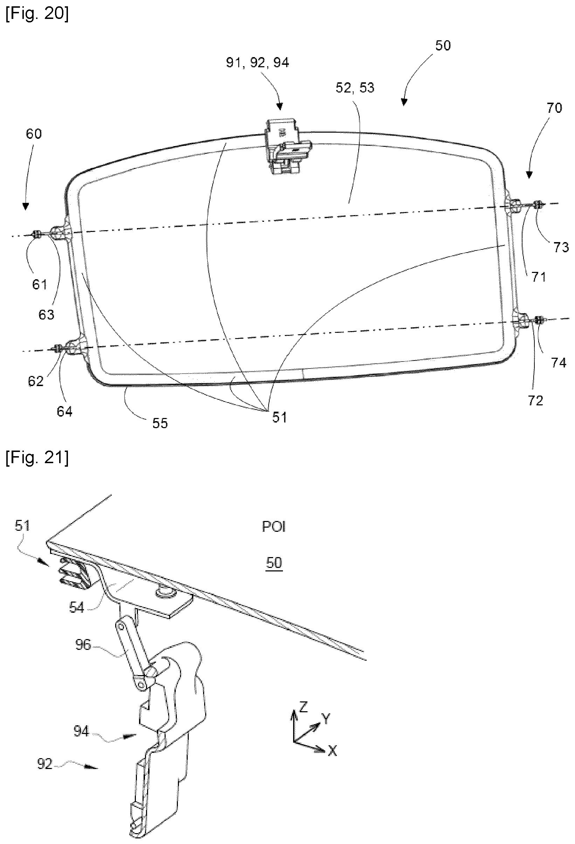

De préférence, comme illustré sur la figure 20, le toit ouvrant 50 comprend un cadre 51. Le cadre 51 peut être métallique, par exemple en acier et/ou en alliage d'aluminium. Avantageusement, le toit ouvrant 50 comprend un panneau 52. Le panneau 52 peut comprendre une surface vitrée 53, par exemple translucide ou transparente, de sorte à offrir davantage de clarté au sein de l'habitacle. En complément, un moyen d'occultation, par exemple un rideau, peut équiper le toit ouvrant de manière à permettre d'occulter la surface vitrée si besoin, par exemple en cas de rayons solaires gênants. Par exemple, le panneau 52 est assemblé sur le cadre 51 par collage.

Comme illustré sur la figure 20, le toit ouvrant 50 comprend des premiers moyens de glissement et/ou de roulement 60 agencés à droite du toit ouvrant 50 et destinés à coopérer avec le premier moyen de guidage 30. Le toit ouvrant 50 comprend des deuxièmes moyens de glissement et/ou de roulement 70 agencés à gauche du toit ouvrant 50 et destinés à coopérer avec le deuxième moyen de guidage 40. Plus précisément, les premiers moyens de glissement et/ou de roulement 60 comprennent un premier galet 61 et un deuxième galet 62 destinés à coopérer avec le premier moyen de guidage 30. Avantageusement, le premier galet 61 et le deuxième galet 62 roulent et/ou glissent respectivement le long de et/ou sur et/ou dans la première rainure 31 et la deuxième rainure 32. Les deuxièmes moyens de glissement et/ou de roulement 70 comprennent un troisième galet 73 et un quatrième galet 74 destinés à coopérer avec le deuxième moyen de guidage 40. Avantageusement, le troisième galet 73 et le quatrième galet 74 roulent et/ou glissent respectivement le long de et/ou sur et/ou dans la troisième rainure 43 et la quatrième rainure 44. Les premiers moyens de glissement et/ou de roulement 60 comprennent un premier axe de rotation 63 du premier galet 61 et un deuxième axe de rotation 64 du deuxième galet 62. Les deuxièmes moyens de glissement et/ou de roulement 70 comprennent un troisième axe de rotation 71 du troisième galet 73 et un quatrième axe de rotation 72 du quatrième galet 74. De préférence, les premier et deuxième axes de rotation 63, 64 sont fixés du côté droit du cadre 51 et les troisième et quatrième axes de rotation 71, 72 sont fixés du côté gauche du cadre 51. Avantageusement, les premiers et troisièmes axes de rotation 63, 71 sont coaxiaux ou sensiblement coaxiaux. De la même manière, avantageusement, les deuxième et quatrième axes de rotation 64, 72 sont coaxiaux ou sensiblement coaxiaux. De préférence, étant donnée la configuration des rainures des premier et deuxième moyens de guidage 30, 40 s'étendant principalement longitudinalement, les axes 63, 64, 71, 72 s'étendent transversalement ou sensiblement transversalement.

Ainsi, le premier moyen de guidage 30 et le deuxième moyen de guidage 40 coopèrent respectivement avec les premiers moyens de glissement et/ou de roulement 60 et les deuxièmes moyens de glissement et/ou de roulement 70. Cette coopération permet de rendre mobile le toit ouvrant 50 par rapport au pavillon 3 entre la position fermée PF dans laquelle l'ouverture 80 est obstruée par le toit ouvrant 50 et l'au moins une position d'ouverture intermédiaire POI dans laquelle l'ouverture 80 est au moins partiellement fermée par le toit ouvrant 50. En outre, cette mobilité permet d'obtenir la position d'ouverture totale POT dans laquelle le toit ouvrant 50 découvre intégralement ou sensiblement intégralement l'ouverture 80. Evidemment, à l'inverse, la mobilité du toit ouvrant permet de passer de l'au moins une position intermédiaire POI ou de la position d'ouverture totale POT vers la position fermée PF.

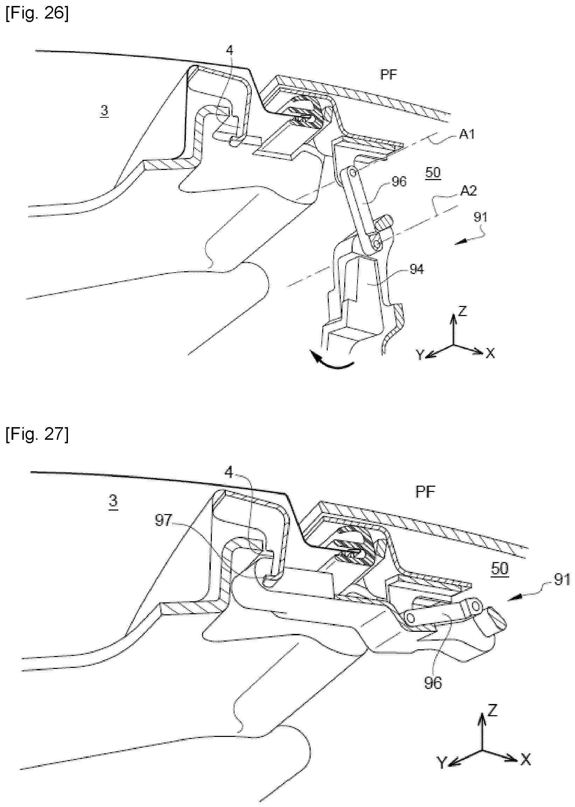

De préférence, comme illustré sur les figures 21, 22, 23, 24 et 25, le toit ouvrant 50 comprend un deuxième moyen de verrouillage et déverrouillage 92 du toit ouvrant 50 dans l'au moins une position d'ouverture intermédiaire POI ou dans la position d'ouverture totale POT. Le toit ouvrant 50 comprend encore un premier moyen de verrouillage et déverrouillage 91 du toit ouvrant 50 dans la position fermée PF, comme illustré sur les figures 26 et 27. Avantageusement, le toit ouvrant 50 comprend une poignée escamotable 94 coopérant avec le pavillon 3 pour verrouiller ou déverrouiller le premier moyen de verrouillage et déverrouillage 91 du toit ouvrant 50 dans la position fermée PF. La poignée escamotable 94 permet en outre de verrouiller ou déverrouiller le deuxième moyen de verrouillage et déverrouillage 92 du toit ouvrant 50 dans l'au moins une position d'ouverture intermédiaire POI ou dans la position d'ouverture totale POT.

Comme illustré en particulier sur les figures 21 à 23, le toit ouvrant 50 comprend une patte de fixation 54 pour la poignée escamotable 94. Par exemple, la patte de fixation 54 de type charnon fixe ou chape est agencée sur le cadre 51 du toit ouvrant.

De préférence, la caisse 2 comprend un joint d'étanchéité 83 agencé au niveau d'un pourtour 81 de l'ouverture 80, comme illustré sur la figure 3. En position fermée PF du toit ouvrant, le joint 83 vient assurer l'étanchéité au niveau d'un pourtour 55 du toit ouvrant se retrouvant en vis-à-vis ou sensiblement en vis-à-vis du pourtour 81 de l'ouverture 80.

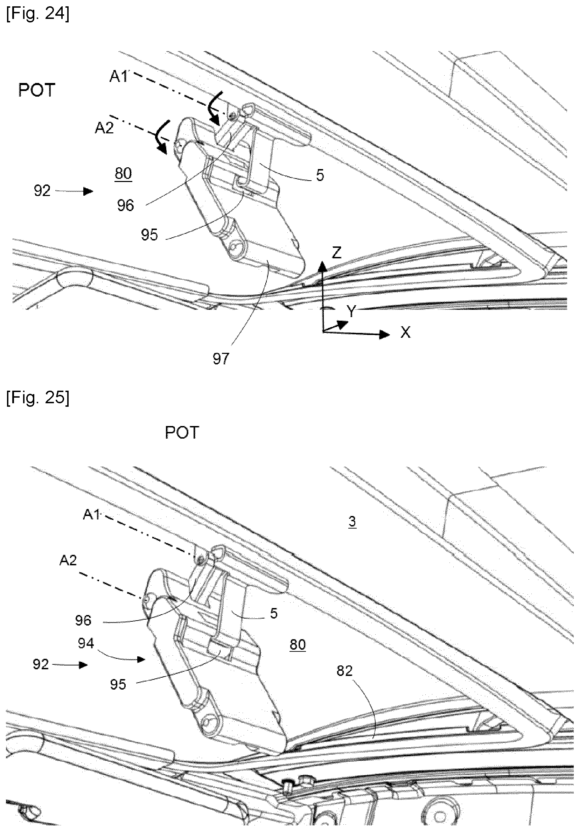

Comme illustré sur la figure 25, en position ouverte du toit ouvrant et poignée escamotable 94 verrouillée, le pourtour 81, ou une partie seulement du pourtour 81, de l'ouverture 80 comprend une feuillure 82 (voir figure 13 également). De préférence, la feuillure 82 s'étend verticalement ou sensiblement verticalement. La feuillure 82 assure le positionnement et/ou le maintien en place du joint 83. A noter que le joint 83 peut comprendre une armature.

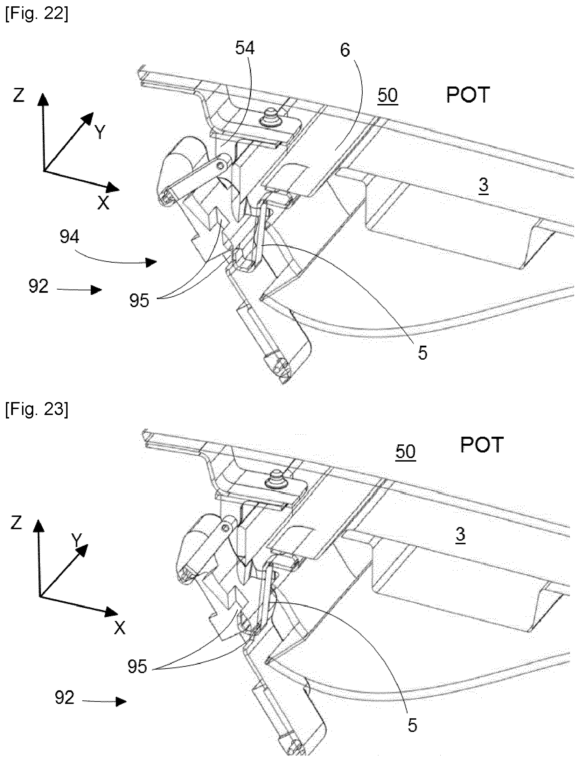

De préférence, comme illustré sur les figures 22, 23, 24 et 25, le pavillon 3 comprend une languette arrière 5 agencée à l'arrière de l'ouverture 80. La languette 5 est apte à coopérer avec la poignée escamotable 94. Plus précisément, de préférence la poignée escamotable 94 comprend une lumière ou un orifice ou une encoche de verrouillage 95. Ainsi, par exemple, pour passer de la position déverrouillée en position d'ouverture totale POT (figure 24) à la position verrouillée en position d'ouverture totale POT (figure 25), la poignée escamotable 94 est pivotée une fois que la languette 5 se retrouve au moins partiellement logée au sein de l'orifice 95. A noter que dans ce mode de réalisation, la languette arrière 5 est fixe par rapport au pavillon 3. Par exemple le deuxième moyen de verrouillage/déverrouillage 92 comprend une biellette 96. La biellette 96 est articulée d'une part par rapport au toit ouvrant 50 autour d'un axe A1, de préférence au niveau du charnon fixe 54. La biellette 96 est articulée d'autre part par rapport à la poignée escamotable 94 autour d'un axe A2. Par pivotement de la poignée escamotable 94, on entend alors des pivotements de la biellette 96 simultanés ou sensiblement simultanés autour des axes A1 et A2. En effet, de tels pivotements engendrent le pivotement de la poignée 94. De préférence les axes A1 et A2 sont parallèles, distincts et s'étendent transversalement ou sensiblement transversalement.

Alternativement, la languette arrière peut être mobile par rapport au pavillon 3 alors que la poignée est fixe par rapport au toit ouvrant.

Comme illustré sur les figures 26 et 27, une languette avant 4, fixée au pavillon 3, à l'avant, permet de verrouiller la poignée en position fermée PF du toit ouvrant 50. Plus précisément, la languette avant 4 coopère avec un point de verrouillage 97 ménagé à une extrémité de la poignée 94. Ce point de verrouillage est par exemple une partie cylindrique, par exemple un axe d'axe parallèle aux axes A1, A2 de la biellette 96 servant au verrouillage en position fermée PF.

En résumé, le toit ouvrant 50 fonctionne manuellement en étant guidé par l'intermédiaire des barres longitudinales 33, 45. De préférence, le toit ouvrant n'a que deux positions pouvant se verrouiller, à savoir la position fermée PF et la position d'ouverture totale POT. Des positions d'ouvertures intermédiaires POI sont avantageusement possibles sans pouvoir être bloquées en position. En effet, de préférence, seules les deux positions extrêmes (PF, POT) sont maintenues en position grâce à la poignée escamotable 94 coopérant avec la caisse 2, plus précisément le pavillon 3, via des languettes avant arrière 4, 5. De préférence, la languette avant 4 est agencée sur ou à proximité d'une traverse avant de pavillon et la languette arrière 5 est agencée, de préférence, sur ou à proximité de la traverse arrière 6 de pavillon.

Concernant la mobilité du toit ouvrant, comme évoqué précédemment, les rainures ou rails ou pistes 31, 32, 43, 44 incluses ou ménagées dans les structures des barres de toit 33, 45 guident le toit ouvrant équipé de galets ou roues ou roulettes 61, 62, 73, 74. Le toit ouvrant 50 comprend de préférence un cadre 51 métallique et un verre collé dessus. De chaque côté du cadre, les axes 63, 64, 71, 72 équipés des galets sont fixés au cadre, par exemple par soudage. Comme illustré sur la figure 11, les barres longitudinales de toit 33, 45 sont par exemple fixées à la caisse 2 et/ou au pavillon 3, par des systèmes vissés et/ou des vis 7. Les barres de toit comprennent de préférence chacune un support rigide, par exemple en plastique, les rainures ou rails, un enjoliveur extérieur 35 (figure 9) et un support d'étanchéité périphérique. Plus précisément, la cinématique est obtenue par l'intermédiaire des deux rainures 43, 44 dans ou sur la barre longitudinale gauche 45 et des deux rainures 31, 32 dans ou sur la barre longitudinale droite 33 (symétrique de la gauche par rapport à un plan médian vertical et longitudinal PM illustré sur la figure 2). Ainsi, de préférence, la première rainure 31 est associée au premier galet 61, la deuxième rainure 32 est associée au deuxième galet 62, la troisième rainure 43 est associée au troisième galet 73 et la quatrième rainure 44 est associée au quatrième galet 74.

Les première et troisième rainures 31, 43 sont inclinées vers l'avant par rapport au pavillon 3 du véhicule. Durant le déplacement de fermeture, l'avant du toit ouvrant 50 se rapproche linéairement de l'ouverture 80 en suivant le profil des première et troisième rainures ménagées dans les barres de toit. L'extrémité avant des première et troisième rainures débouchent à proximité du pavillon, notamment verticalement au même niveau que la pavillon. Les deuxième et quatrième rainures 32, 44 évoluent selon un plan vertical ne présentant pas l'inclinaison des première et troisième rainures. Les deuxième et quatrième rainures 32, 44 évoluent longitudinalement le long d'un plan vertical sensiblement rectiligne et parallèle au pavillon. Du fait des profils différents entre les premier et deuxième rainures des premiers moyens de glissement et/ou de roulement 60, respectivement des troisième et quatrième rainures des deuxièmes moyens de glissement et/ou de roulement 70, le toit ouvrant est apte à prendre une position incliné par rapport au pavillon de toit lors de la fin du déplacement vers sa position de fermeture ou lors du début de déplacement vers une position d'ouverture.

Avantageusement, comme illustré sur les figures 6, 9, 10, 12, 13, 15, 16, 18, la deuxième rainure 32 et la quatrième rainure 44 comprennent respectivement un guidage ou piste ou saignée 36, 46 au niveau des extrémités avant de chacune de ces rainures. De tels guidages 36, 46 permettent une cinématique non rectiligne, éventuellement modifiable, lors du mouvement. En outre, ces deux guidages 36, 46 assurent la « plongée » du toit ouvrant 50 lors d'un passage d'une position d'ouverture (POI ou POT) vers la position fermée PF. En effet, le toit ouvrant est guidé vers son logement, au sein de l'ouverture 80, dans le pavillon 3. A l'inverse, lors du passage de la position fermée PF à une ouverture, les guidages 36, 46 assurent un décalage selon la direction verticale ou sensiblement selon cette direction de sorte à dégager l'arrière du toit ouvrant 50 de l'ouverture 80.

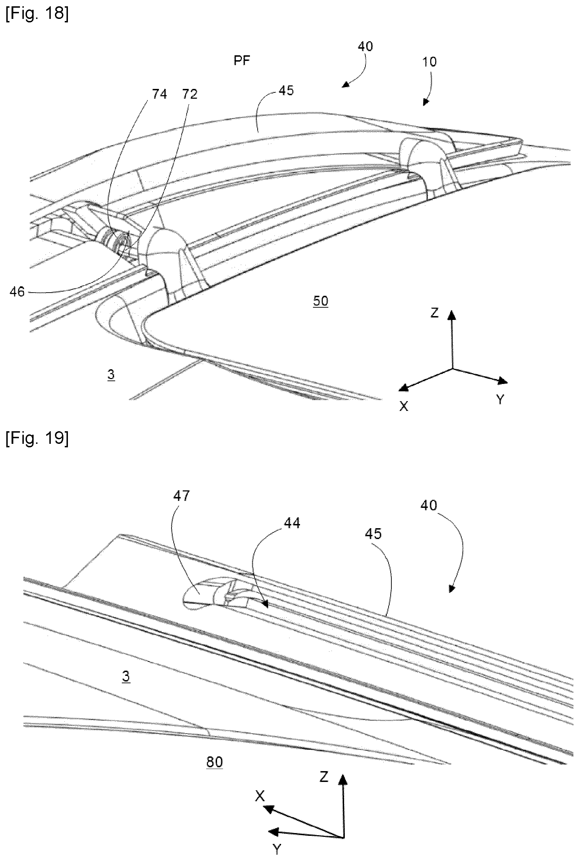

A noter que la deuxième rainure 32 comprend avantageusement une encoche 37 au niveau de son extrémité arrière, comme illustré sur la figure 2. La quatrième rainure 44 comprend avantageusement une encoche 47 au niveau de son extrémité arrière, comme illustré sur la figure 19. Chaque encoche 37, 47 s'étend par exemple vers le bas et vers l'arrière. Les encoches 37, 47 facilitent le blocage ou verrouillage en position d'ouverture totale **POT** du toit ouvrant. En effet, dans cette position d'ouverture du toit ouvrant, les deuxième et quatrième galets 62, 74 viennent se loger, au moins partiellement, dans ces encoches 37, 47. Ceci a pour effet de les caler et par conséquent de participer à l'immobilisation du toit ouvrant 50 dans la position d'ouverture totale POT.

Comme évoqué précédemment, le cadre 51 est de préférence équipé de la patte 54 permettant de fixer la poignée 94 (type grenouillère) pour assurer un lien avec le pavillon 3 et maintenir en position ouverte ou fermée le toit ouvrant. Le pavillon 3, ajouré via l'ouverture 80, reçoit le toit ouvrant dont la forme est spécifique pour permettre que le toit ouvrant soit affleurant. L'étanchéité est assurée par le joint 83 rapporté sur la feuillure 82 ménagée autour de l'ouverture 80 sur le pavillon 3. Le mouvement du toit 50 à la fermeture, obtenu en partie par les deuxième et quatrième galets 62, 74 coopérant avec les guidages 36, 46, font plonger le toit ouvrant suivant un axe spécifique ce qui compresse le joint d'étanchéité 83.

Avantageusement, le pavillon 3 comprend au moins un support, par exemple en plastique, destiné à maintenir la garniture du joint 83 en place tout en assurant le respect des jeux et de la vision (toit ouvrant ouvert et fermé). A l'arrière de l'ouverture ou ajour 80, la patte ou languette arrière 5 est de préférence fixée sur la structure centrale, par exemple sur ou au niveau d'une traverse 6 rigidifiant par exemple le pavillon, comme illustré sur la figure 22. Comme évoqué précédemment, la languette arrière 5 coopère avec la poignée escamotable 94 pour maintenir le toit ouvrant en position d'ouverture totale POT.

A noter que la poignée permet le verrouillage du toit ouvrant, aussi bien en position d'ouverture totale POT qu'en position fermée PF (via la languette avant 4 coopérant avec l'axe 97 de la poignée 94), et un écrasement du joint 83 à la fermeture.

En outre, les barres de toit longitudinales 33, 45 conservent leur fonction d'origine et sont par conséquent disponibles pour supporter des charges ou barres de toit transversales, par exemple préalablement à l'installation d'un coffre de toit. Avantageusement, la forme des barres 33, 45 peut être stylisée et ce, sans impact sur la partie guidage du toit ouvrant assurée par les rainures. Un ou des enjoliveurs 35 peuvent être prévus à des fins esthétiques et/ou aérodynamiques.

En résumé, la solution propose un toit ouvrant simple techniquement, en particulier en étant exempt de partie électrique et/ou électronique et/ou de motorisation et/ou de câble et/ou de connecteur. En outre, la solution ne requiert pas de renfort de la caisse et/ou du pavillon. En effet, il comprend par exemple le cadre 51, le panneau 52 et/ou la surface vitrée 53, les quatre axes équipés des quatre galets et la poignée escamotable 94. En cas de surface vitrée, celle-ci est de préférence en verre trempé ou feuilleté, éventuellement équipée d'un film solaire ou d'un film auto-occultant, teinté ou transparent. Une plaque, en tôle par exemple, peut venir éventuellement recouvrir le toit ouvrant.

La solution s'affranchit ainsi de cadre spécifique ou cassette pour le mouvement du toit ouvrant, les manœuvre étant assurées manuellement.

La masse s'en trouve diminuée. L'architecture intérieure est moins impactée et la « garde aux têtes », ou hauteur sous pavillon, est augmentée. Sa forme simple et les particularités énoncés ci-dessus le rendent particulièrement économique à implanter sur un véhicule. Il en résulte une différence de coûts de fabrication faible entre un véhicule équipé d'un toit ouvrant et un véhicule non équipé.

En remarque, la solution selon l'invention atteint donc l'objectif recherché de rendre moins onéreux et moins complexe un toit ouvrant de véhicule automobile et présente les avantages suivants :
- elle peut être utilisée sur tous types de véhicule automobile, quelle que soit la gamme ;
- elle peut être appliquée sur des véhicules de transport en commun, des bateaux ou encore des engins de chantier ou agricoles, voire sur des ouvrants de bâtiments.

## Revendications

1. Dispositif de guidage (20) pour un toit ouvrant (50) de véhicule, notamment de véhicule automobile (1), le dispositif de guidage comprend :
- un premier moyen de guidage (30) s'étendant longitudinalement ou sensiblement longitudinalement au-dessus d'un pavillon (3) d'un tel véhicule du côté droit, notamment une première barre (33) de toit agencée à droite,
- un deuxième moyen de guidage (40) s'étendant longitudinalement ou sensiblement longitudinalement au-dessus d'un pavillon (3) d'un tel véhicule du côté gauche, notamment une deuxième barre (45) de toit agencée à gauche,
le premier moyen de guidage (30) comprend une première rainure (31) et une deuxième rainure (32) s'étendant respectivement dans un premier plan (P1) et dans un deuxième plan (P2), les premier et deuxième plans (P1, P2) étant distincts, parallèles et s'étendant verticalement et longitudinalement,
et en ce que le deuxième moyen de guidage (40) comprend une troisième rainure (43) et une quatrième rainure (44) s'étendant respectivement dans un troisième plan et dans un quatrième plan, les troisième et quatrième plans étant distincts, parallèles et s'étendant verticalement et longitudinalement,
la deuxième rainure (32) et la quatrième rainure (44) comprennent respectivement un guidage ou piste ou saignée (36, 46) au niveau des extrémités avant de chacune de ces rainures afin de permettre une cinématique non rectiligne lors d'un mouvement du toit ouvrant,
**caractérisé en ce que**
les première et troisième rainures (31, 43) sont inclinées vers l'avant par rapport au pavillon (3) du véhicule,les deuxième et quatrième rainures (32, 44) évoluent selon un plan vertical ne présentant pas l'inclinaison des première et troisième rainures.

2. Dispositif de guidage (20) selon la revendication précédente, **caractérisé en ce que** les guidages (36, 46) assurent un décalage de l'arrière du toit selon une direction verticale ou sensiblement verticale.

3. Agencement (10) comprenant un dispositif de guidage (20) selon l'une des revendications précédentes et un toit ouvrant (50), **caractérisé en ce que** le toit ouvrant (50) comprend un cadre (51), notamment un cadre métallique, et/ou **en ce que** le toit ouvrant (50) comprend un panneau (52), notamment un panneau (52) comprenant une surface vitrée (53), notamment un panneau (52) assemblé sur le cadre (51) par collage.

4. Agencement (10) selon la revendication précédente, **caractérisé en ce que** le toit ouvrant (50) comprend des premiers moyens de glissement et/ou de roulement (60) agencés à droite du toit ouvrant (50) et destinés à coopérer avec le premier moyen de guidage (30), et **en ce que** le toit ouvrant (50) comprend des deuxièmes moyens de glissement et/ou de roulement (70) agencés à gauche du toit ouvrant (50) et destinés à coopérer avec le deuxième moyen de guidage (40).

5. Agencement (10) selon la revendication précédente, **caractérisé en ce que** les premiers moyens de glissement et/ou de roulement (60) comprennent un premier galet (61) et un deuxième galet (62) destinés à coopérer avec le premier moyen de guidage (30), notamment respectivement avec la première rainure (31) et la deuxième rainure (31),
et **en ce que** les deuxièmes moyens de glissement et/ou de roulement (70) comprennent un troisième galet (73) et un quatrième galet (74) destinés à coopérer avec le deuxième moyen de guidage (40), notamment respectivement avec la troisième rainure (43) et la quatrième rainure (44).

6. Agencement (10) selon l'une des revendications 4 ou 5, **caractérisé en ce que** les premiers moyens de glissement et/ou de roulement (60) comprennent un premier axe de rotation (63) du premier galet (61) et un deuxième axe de rotation (64) du deuxième galet (62), et **en ce que** les deuxièmes moyens de glissement et/ou de roulement (70) comprennent un troisième axe de rotation (71) du troisième galet (73) et un quatrième axe de rotation (72) du quatrième galet (74), notamment des premier et deuxième axes de rotation (63, 64) fixés du côté droit du cadre (51) et des troisième et quatrième axes de rotation (71, 72) fixés du côté gauche du cadre (51).

7. Agencement (10) selon la revendication précédente, **caractérisé en ce que** les premiers et troisièmes axes de rotation (63, 71) sont coaxiaux ou sensiblement coaxiaux et **en ce que** les deuxième et quatrième axes de rotation (64, 72) sont coaxiaux ou sensiblement coaxiaux et s'étendent transversalement ou sensiblement transversalement.

8. Caisse (2) de véhicule, notamment de véhicule automobile (1), comprenant un pavillon (3) dans lequel une ouverture (80) est ménagée, la caisse (2) comprenant un agencement (10) selon l'une des revendications 3 à 7, **caractérisée en ce que** le premier moyen de guidage (30) et le deuxième moyen de guidage (40) coopèrent respectivement avec les premiers moyens de glissement et/ou de roulement (60) et les deuxièmes moyens de glissement et/ou de roulement (70) de sorte à rendre mobile le toit ouvrant (50) par rapport au pavillon (3) entre une position fermée (PF) dans laquelle l'ouverture (80) est obstruée par le toit ouvrant (50) et au moins une position d'ouverture intermédiaire (POI) dans laquelle l'ouverture (80) est au moins partiellement obstruée par le toit ouvrant (50), notamment jusqu'à une position d'ouverture totale (POT) dans laquelle le toit ouvrant (50) n'est pas en vis-à-vis de l'ouverture (80), et vice versa.

9. Caisse (2) selon la revendication précédente, **caractérisée en ce que** le toit ouvrant (50) comprend un premier moyen de verrouillage et déverrouillage (91) du toit ouvrant (50) dans la position fermée (PF) et un deuxième moyen de verrouillage et déverrouillage (92) du toit ouvrant (50) dans l'au moins une position d'ouverture intermédiaire (POI) ou dans la position d'ouverture totale (POT).

10. Caisse (2) selon la revendication précédente, **caractérisée en ce que** le toit ouvrant (50) comprend une poignée escamotable (94) coopérant avec le pavillon (3) pour verrouiller ou déverrouiller le premier moyen de verrouillage et déverrouillage (91) du toit ouvrant (50) dans la position fermée (PF) et le deuxième moyen de verrouillage et déverrouillage (92) du toit ouvrant (50) dans l'au moins une position d'ouverture intermédiaire (POI) ou dans la position d'ouverture totale (POT).

11. Caisse (2) selon la revendication précédente, **caractérisée en ce que** le toit ouvrant (50) comprend une patte de fixation (54) de la poignée escamotable (94), notamment une patte de fixation (54) agencée sur le cadre (51).

12. Caisse (2) selon l'une des revendications 8 à 11, **caractérisée en ce que** la caisse (2) comprend un joint d'étanchéité (83) agencé au niveau d'un pourtour (81) de l'ouverture (80).

13. Caisse (2) selon la revendication précédente, **caractérisée en ce que** le pourtour (81) de l'ouverture (80) comprend une feuillure (82), notamment une feuillure (82) s'étendant verticalement, de sorte à permettre le positionnement et le maintien en place du joint (83), notamment d'un joint comprenant une armature.

14. Véhicule, notamment véhicule automobile (1), **caractérisé en ce qu'**il comprend un dispositif de guidage (20) selon l'une des revendications 1 ou 2, et/ou un agencement (10) selon l'une des revendications 3 à 7, et/ou une caisse (2) selon l'une des revendications 8 à 13.

## Patentansprüche

1. Führungsvorrichtung (20) für ein Sonnendach (50) eines Fahrzeugs, insbesondere eines Kraftfahrzeugs (1), wobei die Führungsvorrichtung umfasst:
- ein erstes Führungsmittel (30), das sich längs oder im Wesentlichen längs oberhalb eines Daches (3) eines solchen Fahrzeugs auf der rechten Seite erstreckt, insbesondere eine rechts angeordnete erste Dachleiste (33),
- ein zweites Führungsmittel (40), das sich längs oder im Wesentlichen längs oberhalb eines Daches (3) eines solchen Fahrzeugs auf der linken Seite erstreckt, insbesondere eine links angeordnete zweite Dachleiste (45),
das erste Führungsmittel (30) umfasst eine erste Nut (31) und eine zweite Nut (32), die sich in einer ersten Ebene (P1) bzw. in einer zweiten Ebene (P2) erstrecken, wobei die erste und die zweite Ebene (P1, P2) verschieden sind, parallel sind und sich vertikal und längs erstrecken, und dadurch, dass das zweite Führungsmittel (40) eine dritte Nut (43) und eine vierte Nut (44) umfasst, die sich in einer dritten Ebene bzw. in einer vierten Ebene erstrecken, wobei die dritte und die vierte Ebene verschieden sind, parallel sind und sich vertikal und längs erstrecken,
die zweite Nut (32) und die vierte Nut (44) umfassen jeweils eine Führung oder eine Spur oder einen Schlitz (36, 46) an den vorderen Enden jeder dieser Nuten, um eine nicht gerade Kinematik bei einer Bewegung des Sonnendaches zu ermöglichen,
**dadurch gekennzeichnet, dass**
die erste und die dritte Nut (31, 43) in Bezug auf das Dach (3) des Fahrzeugs nach vorn geneigt sind, die zweite und die vierte Nut (32, 44) entlang einer vertikalen Ebene verlaufen, welche die Neigung der ersten und dritten Nut nicht aufweist.

2. Führungsvorrichtung (20) nach dem vorhergehenden Anspruch, **dadurch gekennzeichnet, dass** die Führungen (36, 46) eine Verlagerung des hinteren Teils des Daches in einer vertikalen oder im Wesentlichen vertikalen Richtung sicherstellen.

3. Anordnung (10), welche eine Führungsvorrichtung (20) nach einem der vorhergehenden Ansprüche und ein Sonnendach (50) umfasst, **dadurch gekennzeichnet, dass** das Sonnendach (50) einen Rahmen (51) umfasst, insbesondere einen metallischen Rahmen, und/oder dadurch, dass das Sonnendach (50) eine Platte (52) umfasst, insbesondere eine Platte (52), die eine verglaste Fläche (53) umfasst, insbesondere eine Platte (52), die durch Kleben am Rahmen (51) montiert ist.

4. Anordnung (10) nach dem vorhergehenden Anspruch, **dadurch gekennzeichnet, dass** das Sonnendach (50) erste Gleit- und/oder Rollmittel (60) umfasst, die rechts vom Sonnendach (50) angeordnet sind und dazu bestimmt sind, mit dem ersten Führungsmittel (30) zusammenzuwirken,
und dadurch, dass das Sonnendach (50) zweite Gleit- und/oder Rollmittel (70) umfasst, die links vom Sonnendach (50) angeordnet sind und dazu bestimmt sind, mit dem zweiten Führungsmittel (40) zusammenzuwirken.

5. Anordnung (10) nach dem vorhergehenden Anspruch, **dadurch gekennzeichnet, dass** die ersten Gleit- und/oder Rollmittel (60) eine erste Laufrolle (61) und eine zweite Laufrolle (62) umfassen, die dazu bestimmt sind, mit dem ersten Führungsmittel (30) zusammenzuwirken, insbesondere mit der ersten Nut (31) bzw. mit der zweiten Nut (31),
und dadurch, dass die zweiten Gleit- und/oder Rollmittel (70) eine dritte Laufrolle (73) und eine vierte Laufrolle (74) umfassen, die dazu bestimmt sind, mit dem zweiten Führungsmittel (40) zusammenzuwirken, insbesondere mit der dritten Nut (43) bzw. mit der vierten Nut (44).

6. Anordnung (10) nach einem der Ansprüche 4 oder 5, **dadurch gekennzeichnet, dass** die ersten Gleit- und/oder Rollmittel (60) eine erste Drehachse (63) der ersten Laufrolle (61) und eine zweite Drehachse (64) der zweiten Laufrolle (62) umfassen,
und dadurch, dass die zweiten Gleit- und/oder Rollmittel (70) eine dritte Drehachse (71) der dritten Laufrolle (73) und eine vierte Drehachse (72) der vierten Laufrolle (74) umfassen, insbesondere eine erste und eine zweite Drehachse (63, 64), die auf der rechten Seite des Rahmens (51) befestigt sind, und eine dritte und eine vierte Drehachse (71, 72), die auf der linken Seite des Rahmens (51) befestigt sind.

7. Anordnung (10) nach dem vorhergehenden Anspruch, **dadurch gekennzeichnet, dass** die erste und die dritte Drehachse (63, 71) koaxial oder im Wesentlichen koaxial sind, und dadurch, dass die zweite und die vierte Drehachse (64, 72) koaxial oder im Wesentlichen koaxial sind und sich quer oder im Wesentlichen quer erstrecken.

8. Karosserie (2) eines Fahrzeugs, insbesondere eines Kraftfahrzeugs (1), welche ein Dach (3) umfasst, in dem eine Öffnung (80) ausgebildet ist, wobei die Karosserie (2) eine Anordnung (10) nach einem der Ansprüche 3 bis 7 umfasst, **dadurch gekennzeichnet, dass** das erste Führungsmittel (30) und das zweite Führungsmittel (40) mit den ersten Gleit- und/oder Rollmitteln (60) bzw. den zweiten Gleit- und/oder Rollmitteln (70) zusammenwirken, um so das Sonnendach (50) in Bezug auf das Dach (3) beweglich zu machen zwischen einer geschlossenen Position (PF), in der die Öffnung (80) durch das Sonnendach (50) versperrt ist, und mindestens einer Zwischenöffnungsposition (POI), in der die Öffnung (80) wenigstens teilweise durch das Sonnendach (50) versperrt ist, insbesondere bis zu einer Position der vollständigen Öffnung (POT), in der sich das Sonnendach (50) nicht gegenüber der Öffnung (80) befindet, und umgekehrt.

9. Karosserie (2) nach dem vorhergehenden Anspruch, **dadurch gekennzeichnet, dass** das Sonnendach (50) ein erstes Mittel zur Verriegelung und Entriegelung (91) des Sonnendaches (50) in der geschlossenen Position (PF) und ein zweites Mittel zur Verriegelung und Entriegelung (92) des Sonnendaches (50) in der mindestens einen Zwischenöffnungsposition (POI) oder in der Position der vollständigen Öffnung (POT) umfasst.

10. Karosserie (2) nach dem vorhergehenden Anspruch, **dadurch gekennzeichnet, dass** das Sonnendach (50) einen versenkbaren Griff (94) umfasst, der mit dem Dach (3) zusammenwirkt, um das erste Mittel zur Verriegelung und Entriegelung (91) des Sonnendaches (50) in der geschlossenen Position (PF) und das zweite Mittel zur Verriegelung und Entriegelung (92) des Sonnendaches (50) in der mindestens einen Zwischenöffnungsposition (POI) oder in der Position der vollständigen Öffnung (POT) zu verriegeln oder zu entriegeln.

11. Karosserie (2) nach dem vorhergehenden Anspruch, **dadurch gekennzeichnet, dass** das Sonnendach (50) eine Befestigungslasche (54) für den versenkbaren Griff (94) umfasst, insbesondere eine Befestigungslasche (54), die am Rahmen (51) angeordnet ist.

12. Karosserie (2) nach einem der Ansprüche 8 bis 11, **dadurch gekennzeichnet, dass** die Karosserie (2) eine Dichtung (83) umfasst, die am Umfang (81) der Öffnung (80) angeordnet ist.

13. Karosserie (2) nach dem vorhergehenden Anspruch, **dadurch gekennzeichnet, dass** der Umfang (81) der Öffnung (80) einen Falz (82) umfasst, insbesondere einen sich vertikal erstreckenden Falz (82), um so die Positionierung und die Fixierung der Dichtung (83) zu ermöglichen, insbesondere einer Dichtung, die eine Armierung umfasst.

14. Fahrzeug, insbesondere Kraftfahrzeug (1), **dadurch gekennzeichnet, dass** es eine Führungsvorrichtung (20) nach einem der Ansprüche 1 oder 2 und/oder eine Anordnung (10) nach einem der Ansprüche 3 bis 7 und/oder eine Karosserie (2) nach einem der Ansprüche 8 bis 13 umfasst.

## Claims

1. Guide device (20) for a sunroof (50) of a vehicle, in particular a motor vehicle (1), the guide device comprises:
- a first guide means (30) extending longitudinally or substantially longitudinally above a roof (3) of such a vehicle on the right-hand side, in particular a first roof bar (33) arranged on the right,
- a second guide means (40) extending longitudinally or substantially longitudinally above a roof (3) of such a vehicle on the left-hand side, in particular a second roof bar (45) arranged on the left,
the first guide means (30) comprises a first groove (31) and a second groove (32), extending in a first plane (P1) and in a second plane (P2), respectively, the first and second planes (P1, P2) being separate, parallel and extending vertically and longitudinally, and in that the second guide means (40) comprises a third groove (43) and a fourth groove (44) extending in a third plane and in a fourth plane, respectively, the third and fourth planes being separate, parallel and extending vertically and longitudinally,
the second groove (32) and the fourth groove (44) respectively comprise a guide or track or undercut (36, 46) at the front ends of each of these grooves so as to allow non-rectilinear kinematics during movement of the sunroof,
**characterized in that**
the first and third grooves (31, 43) are inclined towards the front relative to the roof (3) of the vehicle, the second and fourth grooves (32, 44) progress along a vertical plane that does not have the inclination of the first and third grooves.

2. Guide device (20) according to the preceding claim, **characterized in that** the guides (36, 46) ensure that the rear of the roof is offset in a vertical or substantially vertical direction.

3. Arrangement (10) comprising a guide device (20) according to either of the preceding claims and a sunroof (50), **characterized in that** the sunroof (50) comprises a frame (51), in particular a metal frame, and/or **in that** the sunroof (50) comprises a panel (52), in particular a panel (52) comprising a glazed surface (53), in particular a panel (52) assembled to the frame (51) by adhesive bonding.

4. Arrangement (10) according to the preceding claim, **characterized in that** the sunroof (50) comprises first sliding and/or rolling means (60) arranged to the right of the sunroof (50) and intended to cooperate with the first guide means (30),
and **in that** the sunroof (50) comprises second sliding and/or rolling means (70) arranged to the left of the sunroof (50) and intended to cooperate with the second guide means (40).

5. Arrangement (10) according to the preceding claim, **characterized in that** the first sliding and/or rolling means (60) comprise a first roller (61) and a second roller (62) intended to cooperate with the first guide means (30), in particular with the first groove (31) and the second groove (31), respectively,
and **in that** the second sliding and/or rolling means (70) comprise a third roller (73) and a fourth roller (74) intended to cooperate with the second guide means (40), in particular with the third groove (43) and the fourth groove (44), respectively.

6. Arrangement (10) according to either of Claims 4 and 5, **characterized in that** the first sliding and/or rolling means (60) comprise a first rotary pin (63) of the first roller (61) and a second rotary pin (64) of the second roller (62),
and **in that** the second sliding and/or rolling means (70) comprise a third rotary pin (71) of the third roller (73) and a fourth rotary pin (72) of the fourth roller (74), in particular first and second rotary pins (63, 64) fastened to the right-hand side of the frame (51) and third and fourth rotary pins (71, 72) fastened to the left-hand side of the frame (51).

7. Arrangement (10) according to the preceding claim, **characterized in that** the first and third rotary pins (63, 71) are coaxial or substantially coaxial and **in that** the second and fourth rotary pins (64, 72) are coaxial or substantially coaxial and extend transversely or substantially transversely.

8. Body (2) of a vehicle, in particular a motor vehicle (1), comprising a roof (3) in which an opening (80) is provided, the body (2) comprising an arrangement (10) according to one of Claims 3 to 7, **characterized in that** the first guide means (30) and the second guide means (40) cooperate with the first sliding and/or rolling means (60) and the second sliding and/or rolling means (70), respectively, so as to enable the sunroof (50) to move relative to the roof (3) between a closed position (PF) in which the opening (80) is obstructed by the sunroof (50) and at least one intermediate open position (POI) in which the opening (80) is at least partially obstructed by the sunroof (50), in particular as far as a fully open position (POT) in which the sunroof (50) is not facing the opening (80), and vice versa.

9. Body (2) according to the preceding claim, **characterized in that** the sunroof (50) comprises a first means (91) for locking and unlocking the sunroof (50) in the closed position (PF) and a second means (92) for locking and unlocking the sunroof (50) in the at least one intermediate open position (POI) or in the fully open position (POT).

10. Body (2) according to the preceding claim, **characterized in that** the sunroof (50) comprises a retractable handle (94) cooperating with the roof (3) in order to lock or unlock the first means (91) for locking and unlocking the sunroof (50) in the closed position (PF) and the second means (92) for locking and unlocking the sunroof (50) in the at least one intermediate open position (POI) or in the fully open position (POT).

11. Body (2) according to the preceding claim, **characterized in that** the sunroof (50) comprises a fastening tab (54) for the retractable handle (94), in particular a fastening tab (54) arranged on the frame (51) .

12. Body (2) according to one of Claims 8 to 11, **characterized in that** the body (2) comprises a seal (83) arranged at a periphery (81) of the opening (80).

13. Body (2) according to the preceding claim, **characterized in that** the periphery (81) of the opening (80) comprises a rebate (82), in particular a rebate (82) extending vertically, so as to allow the seal (83), in particular a seal comprising a reinforcement, to be positioned and held in place.

14. Vehicle, in particular a motor vehicle (1), **characterized in that** it comprises a guide device (20) according to either of Claims 1 and 2, and/or an arrangement (10) according to one of Claims 3 to 7, and/or a body (2) according to one of Claims 8 to 13.
